# FASCICULE DE BREVET EUROPEEN

(11) **EP 4 388 052 B1**
(45) Date de publication et mention de la délivrance du brevet: **17.12.2025**
(21) Numéro de dépôt: 22769664.8
(22) Date de dépôt: 29.08.2022
(51) Int. Cl.: C09D 129/04, C08J 5/18, C08K 3/22

(54) **UTILISATION D'UN FILM POLYMÈRE OBTENU PAR APPLICATION D'UNE COMPOSITION FILMOGÈNE POUR SURFACE MÉTALLIQUE CONTRE LA FRAGILISATION DE LA SURFACE PAR L'HYDROGÈNE**
VERWENDUNG EINER POLYMERFOLIE AUS EINER FILMBILDENDEN ZUSAMMENSETZUNG FÜR METALLISCHE OBERFLÄCHEN GEGEN VERSPRÖDUNG DER OBERFLÀCHEN DURCH WASSERSTOFF
USE OF A POLYMER FILM OBTAINED BY APPLYING A FILM-FORMING COMPOSITION FOR METAL SURFACES AGAINST HYDROGEN EMBRITTLEMENT OF THE SURFACES

(30) Priorité: 01.09.2021 FR 2109131
(43) Date de publication de la demande: 26.06.2024
(73) Titulaire: GRTgaz, 92270 Bois-Colombes (FR)
(72) Inventeur: ARNAUTU, Monica, 13011 MARSEILLE (FR); DRAPPIER, Charlotte, 13005 MARSEILLE (FR); CLISSON, Laurent, 95130 LE PLESSIS BOUCHARD (FR); VILACA, Gil, 77700 SERRIS (FR)
(74) Mandataire: Cornuejols, Marine Sophie
(86) Numéro de dépôt international: PCT/EP2022/073886
(87) Numéro de publication internationale: WO 2023/031081

(56) Documents cités:
- EP-A1- 3 006 522
- EP-A1- 3 178 897
- CN-A- 105 860 696
- CN-A- 107 312 404
- JP-A- H0 867 786
- US-A1- 2016 319 176

## Description

### DOMAINE TECHNIQUE DE L'INVENTION

La présente invention vise l'utilisation d'un film polymérique obtenu par application d'une composition filmogène pour surface métallique.

L'invention s'applique, notamment, à l'industrie de production et de transport de gaz et en particulier à la protection de la surface interne d'une conduite en acier transportant de l'hydrogène gazeux.

### ÉTAT DE LA TECHNIQUE

Les propriétés physico-chimiques de l'hydrogène, et notamment sa très petite taille, provoquent une adsorption de l'hydrogène gazeux sur les surfaces métalliques, telles que l'acier, puis une migration de l'hydrogène à travers la structure métallique. Ce mécanisme entraine un vieillissement accéléré irréversible de la structure métallique. Ce phénomène est appelé fragilisation par l'hydrogène (d'acronyme « FPH »). La FPH a lieu dans des conduites, par exemple en acier, qui transportent de l'hydrogène gazeux.

Des solutions existantes et mentionnées dans l'art antérieur consistent à protéger l'acier de la FPH en utilisant un revêtement de type matrice inorganique, telles que le carbure de titane ou le nitrure de titane. Cependant, ce type de revêtement est difficilement appliqué dans des conduites existantes. Par exemple, avant l'application du revêtement, il est nécessaire de contrôler l'atmosphère ou de faire le vide. De plus, une utilisation de produits sensibles dont la manipulation est délicate est également nécessaire pour l'application du revêtement sur la surface à protéger. Lorsque ces revêtements ont été appliqués sur la surface métallique, ces revêtements présentent l'inconvénient majeur d'être mécaniquement fragiles. De plus, l'existence de défauts ou de fissures dès l'application du revêtement ou générées après, lors de l'utilisation de la conduite, compromet l'effet protecteur du revêtement.

D'autres solutions sont enseignées dans l'art antérieur et sont appliquées à la protection de conduite transportant des solutions liquides. Elles ne sont cependant pas transposables aux conduites transportant un gaz. De plus, certains composés inhibiteurs d'hydrogène présents dans un tel revêtement compromettent la pureté de l'hydrogène gazeux transporté.

D'autres solutions connues de l'homme du métier consistent à utiliser un revêtement de type couche d'oxyde sur la surface métallique. Cette solution de revêtement de surface métallique est connue, elle est utilisée notamment lors des étapes de passivation des métaux, correspondant à un traitement permettant de former une couche d'oxyde anticorrosion. Cependant, ce revêtement n'est pas stable puisqu'il peut être réduit par l'hydrogène gazeux transporté dans la conduite.

On connait les demandes de brevet EP 30 06 522, CN 107 312 404, EP 31 78 897, JP 408 067 786, CN 105 860 696 et US 2016 319 176 qui divulguent une composition permettant d'obtenir un film polymérique pouvant comporter du PVA (PolyVinylAlcool) et de l'alumine (Al₂O₃). Cependant, une telle composition générant un tel film ne permet pas de limiter efficacement la FPH notamment par inhibition de l'hydrogène sur la surface métallique, l'hydrogène circulant dans une conduite de transport de gaz.

### EXPOSÉ DE L'INVENTION

La présente invention vise à remédier à tout ou partie de ces inconvénients.

À cet effet, selon un premier aspect, la présente invention vise l'utilisation d'un film polymérique (20, 21) obtenu par application d'une composition filmogène pour surface métallique (10), la composition filmogène comportant au moins un polymère vinylique et/ou un copolymère vinylique soluble dans l'eau, un solvant aqueux et des particules solides d'alumine (Al₂O₃) dispersées dans le solvant aqueux, le film polymérique comportant au moins un polymère vinylique et/ou un copolymère vinylique et des particules solides dispersées d'alumine (Al₂O₃) pour la protection d'une surface métallique contre la fragilisation par l'hydrogène.Grâce à ces dispositions, la composition filmogène peut être appliquée sur une surface métallique et ainsi former un film protecteur contre la fragilisation mécanique induite par un gaz.

Dans des modes de réalisation, la composition présente des proportions respectives, par rapport à la masse totale de la composition :
- polymère vinylique et/ou un copolymère vinylique : 5 à 25% en masse,
- Al₂O₃ : 0,2 à 10% en masse et
- solvant aqueux : au moins 70% en masse.

Grâce à ces dispositions, la composition présente une meilleure solubilisation des polymères et une meilleure dispersion unitaire des particules solides d'alumine (Al₂O₃) et permet ainsi d'améliorer les propriétés barrières du film obtenu après application de la composition sur la surface métallique. De plus, la taille des particules solides d'alumine dans une telle composition et la viscosité conférée par le polymère permettent le maintien des particules en suspension dans la composition. Ainsi le dépôt et l'agglomération des particules solides d'alumine dans la composition sont limités.

Dans des modes de réalisation, la composition comporte au moins un inhibiteur d'adsorption, d'absorption et/ou de diffusion, d'hydrogène.

Grâce à ces dispositions, lorsque la composition est appliquée en film sur la surface métallique, l'inhibiteur d'adsorption, d'absorption et/ou de diffusion, d'hydrogène améliore la protection de cette surface contre la fragilisation mécanique par l'hydrogène. Par exemple, cette protection est obtenue lors de la circulation d'hydrogène dans une conduite en acier comportant ce film.

Dans des modes de réalisation, la proportion d'inhibiteur d'adsorption, d'absorption et/ou de diffusion, d'hydrogène est comprise entre 0,005% et 2%, par rapport à la masse totale de la composition.

Grâce à ces dispositions, lorsque la composition est appliquée en film sur la surface métallique, l'inhibiteur d'adsorption, d'absorption et/ou de diffusion, d'hydrogène confère une protection optimale de cette surface contre la fragilisation par l'hydrogène.

Dans des modes de réalisation, la composition comporte au moins un copolymère vinylique qui est un copolymère éthylène alcool vinylique (d'acronyme « EVOH »).

Grâce à ces dispositions, lorsque la composition est appliquée en film sur la surface métallique, la présence du copolymère EVOH améliore les propriétés barrières de ce film face à différentes molécules, par exemple des gaz tels que l'air, l'hydrogène, l'oxygène, le dioxyde carbone, le méthane ou l'eau.

Est également décrit un procédé d'application de la composition objet de la présente invention, sur une surface métallique, qui comporte :
- au moins une étape de pulvérisation de la composition sur la surface et
- au moins une étape de séchage et/ou réticulation de la composition pulvérisée.

Grâce à ces dispositions, l'application de la composition filmogène à grande échelle est mise en œuvre, et notamment sur une surface métallique étendue, comme la surface interne d'une conduite transportant un gaz tel que l'hydrogène. Ce procédé permet également de former un film homogène, continu et mécaniquement stable.

Dans des modes de réalisation décrits, le procédé comporte au moins deux itérations de l'étape de pulvérisation et de l'étape de séchage et/ou réticulation.

Grâce à ces dispositions, un film de plusieurs couches successives est formé, dont l'épaisseur améliore ainsi l'effet barrière contre un gaz, tel que l'hydrogène, en optimisant le temps de séchage. Plus le film est épais, plus l'effet barrière est important.

Dans des modes de réalisation, le les proportions du film sont, par rapport à la masse totale du film :
- polymère vinylique et/ou un copolymère vinylique : 70 à 95% en masse, et
- Al₂O₃ : 3,5 à 30% en masse.

Grâce à ces dispositions, une surface métallique est protégée contre la fragilisation induite par un gaz. Par exemple, l'acier est protégé de la fragilisation par l'hydrogène en limitant la pénétration de l'hydrogène dans la surface de l'acier.

Dans des modes de réalisation, le film polymérique comporte un inhibiteur d'adsorption, d'absorption et/ou de diffusion, d'hydrogène, les proportions des constituants du film sont, par rapport à la masse totale du film :
- polymère vinylique et/ou un copolymère vinylique : 70 à 95% en masse,
- Al₂O₃ : au moins 3,5% en masse et
- inhibiteur d'adsorption, d'absorption et/ou de diffusion, d'hydrogène : 0,05 à 6 % en masse.

Dans des modes de réalisation, le film polymérique comporte, de plus, un inhibiteur d'adsorption, d'absorption et/ou de diffusion, d'hydrogène.

Dans des modes de réalisation, les proportions sont, par rapport à la masse totale du film :
- polymère vinylique et/ou un copolymère vinylique : 70 à 95% en masse,
- Al_{b}O₃ : au moins 3,5% en masse, et
- inhibiteur d'adsorption, d'absorption et/ou de diffusion, d'hydrogène : 0,05 à 6 % en masse.

Grâce à ces dispositions, l'inhibiteur d'adsorption, d'absorption et/ou de diffusion, d'hydrogène incorporé au film objet de la présente invention améliore la protection de la surface métallique contre la fragilisation par l'hydrogène. Par exemple, cette protection est obtenue lors de la circulation d'hydrogène dans une conduite en acier revêtue ce film.

Dans des modes de réalisation, le film comporte au moins un copolymère vinylique qui est un copolymère éthylène alcool vinylique (EVOH).

Grâce à ces dispositions, la présence du copolymère EVOH améliore les propriétés barrières face à différents gaz tels que l'air, l'hydrogène, l'oxygène, le dioxyde carbone, le méthane ou l'eau.

Dans des modes de réalisation, le film présente une épaisseur, après séchage, comprise entre 50 micromètres et 1 millimètre.

Grâce à ces dispositions, l'épaisseur confère au film des propriétés barrières améliorées contre différent gaz.

Dans des modes de réalisation, les particules d'Al₂O₃ forment des charges présentant un facteur de forme compris entre 10 et 1000.

### BRÈVE DESCRIPTION DES FIGURES

D'autres avantages, buts et caractéristiques particulières de l'invention ressortiront de la description non limitative qui suit d'au moins un mode de réalisation particulier de l'utilisation objet de la présente invention, en regard des dessins annexés, dans lesquels :
La figure 1 représente, schématiquement, la pénétration de l'hydrogène dans la structure métallique, responsable de la fragilisation par l'hydrogène,
La figure 2 représente, schématiquement, l'effet d'un mode de réalisation d'un film polymérique objet de la présente invention, sur la pénétration de l'hydrogène,
La figure 3 représente, schématiquement, l'effet d'un mode de réalisation d'un film polymérique objet de la présente invention, sur la pénétration de l'hydrogène,
La figure 4 représente, schématiquement, un effet de tortuosité lié à la présence de particules solides d'alumine (Al₂O₃) dans le film polymérique,
La figure 5 représente, schématiquement, un effet de tortuosité lié à la présence de particules solides d'alumine (Al₂O₃) dans le film polymérique,
La figure 6 représente, sous forme de logigramme, un mode de réalisation particulier du procédé d'application décrit et
La figure 7 représente, schématiquement, un mode de réalisation particulier d'un dispositif d'application de la composition filmogène et d'une conduite.

### DESCRIPTION DES MODES DE RÉALISATION

La présente description est donnée à titre non limitatif, chaque caractéristique d'un mode de réalisation pouvant être combinée à toute autre caractéristique de tout autre mode de réalisation de manière avantageuse.

On rappelle ici les définitions suivantes :
- le terme « filmogène » se réfère à une composition formant un film par exemple après séchage et/ou réticulation ;
- le terme « surface métallique » se réfère à tout type de surface comportant un métal, par exemple un alliage tel que l'acier ;
- le terme « solvant aqueux » désigne un solvant comportant au moins cinquante pour cent d'eau ;
- le terme « inhibiteur d'adsorption, d'absorption et/ou de diffusion, d'hydrogène » se réfère à un composé limitant la propagation et/ou l'adsorption ou l'absorption de l'hydrogène au niveau de la surface métallique et/ou dans la structure métallique lorsqu'il est appliqué à la surface du métal,
- le terme « charges » se réfère à des particules solides.
On note dès à présent que les figures ne sont pas à l'échelle.

### Composition filmoqène

La composition filmogène objet de la présente invention comporte au moins un polymère vinylique et/ou un copolymère vinylique soluble dans l'eau, un solvant aqueux et des particules solides d'alumine (Al₂O₃) dispersées dans le solvant aqueux.

Cette composition filmogène est applicable sur tout type de surface, par exemple une surface métallique 10, et aboutit à la formation d'un film 20.

Préférentiellement, la dispersion des particules solides d'alumine dans la composition est homogène.

L'utilisation d'un solvant aqueux dans la composition permet une bonne solubilisation des polymères, ainsi qu'une bonne dispersion unitaire des particules solides d'alumine (Al₂O₃) dans la composition. Lorsque les particules sont exfoliées, on observe une amélioration des propriétés barrières du film polymérique 20 formé à partir de la composition filmogène. Les solvants organiques tels que le diméthyle sulfoxyde ou la cyclohexanone ne permettent pas une telle dispersion unitaire des particules solides d'alumine (Al₂O₃).

Préférentiellement, le solvant aqueux est de l'eau distillée.

Préférentiellement, la composition comporte au moins un copolymère vinylique qui est un copolymère éthylène alcool vinylique (EVOH).

Préférentiellement, la composition présente des proportions respectives, par rapport à la masse totale de la composition :
- polymère vinylique et/ou un copolymère vinylique : 5 à 25% en masse,
- Al₂O₃ : 0,2 à 10% en masse et
- solvant aqueux : 70 à 95% en masse.

Grâce à ces dispositions, la composition présente une exfoliation des particules solides d'alumine (Al₂O₃) optimale, permettant ainsi d'améliorer les propriétés barrières du film 20 obtenu après application de la composition sur la surface métallique 10. Une telle concentration en polymère confère à la composition une viscosité adéquate pour faciliter l'application, par exemple par un dispositif et selon un procédé 30 objet de la présente invention. La viscosité de la composition est comprise entre 30 et 7500 mPa.s et est ainsi adaptée pour former le film 20 d'épaisseur comprise entre 50 micromètres et 1 millimètre.

Encore plus préférentiellement, la composition présente des proportions respectives, par rapport à la masse totale de la composition :
- polymère vinylique et/ou copolymère vinylique : 5 à 20% en masse,
- Al₂O₃ : 0,5 à 5% en masse et
- solvant aqueux : au moins 75% en masse.

Dans des modes de réalisation, la composition objet de la présente invention comporte, de plus, au moins un inhibiteur d'adsorption, d'absorption et/ou de diffusion, d'hydrogène.

Grâce à ces dispositions, l'inhibiteur d'adsorption, d'absorption et/ou de diffusion, incorporé dans le film 20 et issu de la composition objet de la présente invention présente de meilleures propriétés barrières contre l'hydrogène, et prévient ainsi la fragilisation par l'hydrogène d'une structure métallique.

L'inhibiteur d'adsorption, d'absorption et/ou de diffusion, d'hydrogène limite respectivement l'adsorption dissociative de l'hydrogène gazeux à la surface du métal, et la pénétration de l'hydrogène dans de la surface métallique 10. Par exemple, cette protection est obtenue lors de la circulation d'hydrogène dans une conduite en acier comportant ce film 20.

L'inhibiteur d'adsorption, d'absorption et/ou de diffusion, d'hydrogène peut être choisi parmi les familles chimiques suivantes :
- nitriles, benzonitriles,
- alcools,
- alcènes,
- alcynes,
- composés cycliques et hétérocycliques conjugués,
- cyanamides,
- acides,
- isocyanates,
- cyanonaphtalène,
- amines et autres composés azotés,
- sels des composés azotés,
- carbures,
- nitrures et/ou
- tout mélange ou solution contenant un ou plusieurs des composés ci-dessus.

On note que de tels inhibiteurs sont notamment capables de s'adsorber à la surface d'un substrat métallique, telle qu'une surface métallique, afin de contrôler la réactivité électrochimique d'un tel substrat. Ainsi, les inhibiteurs sont des composés dits « interfacialement actifs ». Notamment les inhibiteurs recouvrent la surface métallique, par exemple une surface en fer, par interactions électrostatiques. Par exemple, les inhibiteurs possèdent au moins un centre actif susceptible d'interagir avec la couche électronique du métal, par exemple de l'azote ou de l'oxygène.

La fonction d'inhibition d'hydrogène de tels inhibiteurs est obtenue selon, par exemple, au moins un des deux modes d'action suivants :
- un mécanisme dit de « physisorption » correspondant à une adsorption de l'inhibiteur sur la surface métallique, bloquant des sites actifs cathodiques de transfert d'électron à partir du métal, empêchant la décharge de l'hydrogène sur le métal et limitant ainsi la réaction responsable de la pénétration dans le substrat métallique ;
- un mécanisme dit de « chimisorption » correspondant à un piégeage des ions hydrogène déchargés à la surface d'un métal, un tel piégeage étant réalisé par une couche de molécules d'inhibiteur, un tel inhibiteur réagissant avec un proton (H⁺).

Préférentiellement, la proportion d'inhibiteur d'adsorption, d'absorption et/ou de diffusion, d'hydrogène est comprise entre 0,005% et 2% en masse, par rapport à la masse totale de la composition.

À titre d'exemple, la proportion d'inhibiteur d'adsorption, d'absorption et/ou de diffusion, d'hydrogène est comprise entre 0,03% et 0,07% en masse, par rapport à la masse totale de la composition. Ces valeurs correspondent à un compromis entre l'adhésion et les performances du film 20. Si la proportion d'inhibiteur d'adsorption, d'absorption et/ou de diffusion, d'hydrogène est supérieure à 0,07% en masse, par rapport à la masse totale de la composition, l'adhésion du film est dégradée. Si la proportion d'inhibiteur d'adsorption, d'absorption et/ou de diffusion, d'hydrogène est inférieure à 0,03% en masse, par rapport à la masse totale de la composition, l'efficacité est réduite.

Dans des modes de réalisation, la composition est préparée par mélange de deux compositions intermédiaires, par exemple une composition comportant des particules solides d'alumine et l'autre composition comportant au moins un polymère vinylique et/ou un copolymère vinylique.

Préférentiellement, les deux compositions intermédiaires sont préparées simultanément.

Dans d'autres modes de réalisation, les deux compositions sont préparées successivement. Par exemple, la composition comportant les particules solides d'alumine est obtenue par ajout d'une quantité prédéterminée d'alumine dans de l'eau, suivi d'une agitation à température ambiante. Ensuite, la composition comportant un polymère est obtenue par ajout d'une quantité prédéterminée de polymère solide dans de l'eau suivi d'une agitation. La composition objet de la présente invention est obtenue par mélange de quantités prédéterminées de ces deux compositions, suivi d'une agitation à température ambiante.

Préférentiellement, l'agitation des compositions est mise en œuvre par un agitateur industriel, par exemple un agitateur mécanique. Grâce à ces dispositions, la préparation la composition objet de la présente invention est possible à l'échelle industrielle.

Dans des modes de réalisations, la composition comportant les particules solides d'alumine est soumise à des ultrasons.

Dans des modes de réalisation, la composition comportant le polymère est chauffée à 90°C puis refroidit à température ambiante.

Grâce à ces dispositions, la solubilisation du polymère dans la composition est optimale.

Dans des modes de réalisation, la composition comporte, de plus, un agent gélifiant configuré pour que la composition forme un gel. Préférentiellement, la proportion d'agent gélifiant est comprise entre 0,01% et 5% en masse et préférentiellement entre 1% et 2% en masse, par rapport à la masse totale de la composition. La viscosité de la composition est alors augmentée.

### Exemple de réalisation de la composition

Tous les pourcentages exprimés ci-dessous sont des pourcentages massiques (m/m).

Un exemple de préparation de la composition dite « composition C » est décrit ci-dessous.

Deux compositions intermédiaires, nommées « compositions intermédiaires A et B » sont préparées puis mélangées pour obtenir la « composition C », correspondant à un mode de réalisation de l'objet de l'invention.

La composition intermédiaire A correspond à une dispersion d'alumine (Al₂O₃) à 24% m/m dans de l'eau distillée. La composition A est obtenue en ajoutant 12 grammes d'alumine (Al₂O₃) dans 38 grammes d'eau distillée, suivi d'une agitation avec un barreau aimanté pendant 30 minutes à température ambiante et d'une exposition aux ultrasons pendant 30 minutes supplémentaires grâce à l'utilisation d'un bain à ultrasons.

La composition intermédiaire B correspond à une composition à 10% en copolymère EVOH dans de l'eau distillée. Elle est obtenue en ajoutant 10 grammes de copolymère EVOH, par exemple de l'Exceval 2117 (marque déposée), dans 90 grammes d'eau distillée, suivi d'une agitation avec un barreau aimanté en chauffant à 90°C jusqu'à la solubilisation complète du copolymère.

La composition C est ensuite obtenue en mélangeant 25 grammes de la composition B, 0,7 gramme de la composition A et 0,0135 gramme d'inhibiteur d'adsorption, d'absorption et/ou de diffusion, d'hydrogène, par exemple du SurTec 424 (marque déposée), suivi d'une agitation avec un barreau aimanté à température ambiante durant 30 minutes.

### Film polymérique

Le film polymérique 20 objet de la présente invention est obtenu à partir d'un mode de réalisation de la composition objet de la présente invention décrite ci-dessus.

Préférentiellement, le film polymérique 20 est obtenu selon un mode de réalisation du procédé objet de la présente invention décrit ci-dessous.

Préférentiellement, les proportions sont, par rapport à la masse totale du film :
- polymère vinylique et/ou un copolymère vinylique : 70 à 95% en masse et
- Al₂O₃ : 3,5 à 30% en masse.

Étant donné la composition dont est issu le film, le film 20 présente une matrice polymérique composite dans laquelle les particules d'alumine sont dispersées unitairement.

Le film 20 est appliqué en tant que revêtement d'une surface métallique 10 et permet, grâce à ses propriétés barrières, de protéger cette surface contre la fragilisation mécanique induite par un gaz. Par exemple, ce film 20 protège l'acier de la fragilisation par l'hydrogène en limitant le contact entre l'hydrogène et la surface de l'acier.

Les propriétés barrières de ce film 20 de revêtement d'une surface métallique 10 permettent :
- un ralentissement de la diffusion d'un gaz, tel que l'hydrogène gazeux, vers la surface métallique 10, et
- une diminution locale la concentration d'un gaz, tel que l'hydrogène gazeux, sur la surface métallique 10.

Ainsi, la perméabilité du gaz dans le film polymérique 20 et la pénétration du gaz dans la surface métallique 10 sont fortement diminuées. Par exemple, la perméabilité est divisée par deux, trois ou quatre.

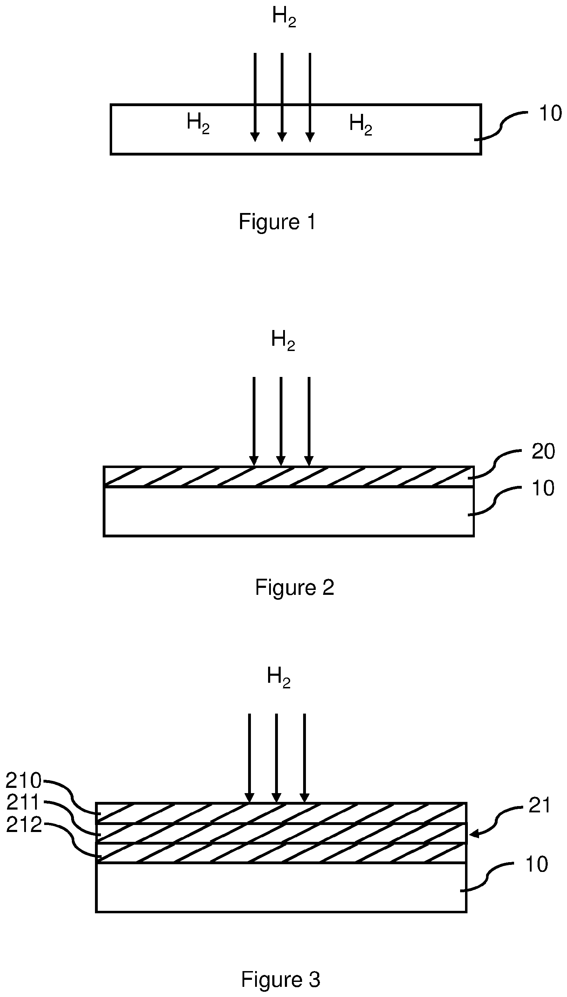

On observe sur la figure 1, qui n'est pas à l'échelle, une représentation schématique d'une surface métallique 10 dans laquelle l'hydrogène pénètre et diffuse dans la surface métallique 10. La surface métallique 10 ne présente pas de film polymérique objet de la présente invention.

On observe sur les figures 2 et 3, qui ne sont pas à l'échelle, les propriétés barrières du film polymérique, 20 ou 21, servant de revêtement à la structure métallique 10. Les figures 2 et 3, contrairement à la figure 1, montrent que le film polymérique, 20 ou 21, limite la pénétration de l'hydrogène dans la surface métallique 10.

La présence d'au moins un polymère vinylique et/ou copolymère vinylique formant le film confère au film ses propriétés barrières face à différents gaz tels que l'air, l'hydrogène, l'oxygène, le dioxyde carbone, le méthane ou l'eau.

Préférentiellement, le film 20 comporte au moins un copolymère vinylique qui est un copolymère éthylène alcool vinylique (EVOH).

Les particules solides dispersées d'alumine (Al₂O₃) permettent une amélioration des propriétés barrières du film, notamment par une augmentation de la tortuosité.

Dans des modes de réalisation, tels que représentés en figure 3, le film 21 comporte plusieurs couches 210, 211 et 212, successives, liées entre elles. Chaque couche est obtenue après application et séchage de la composition objet de la présente invention. On observe sur la figure 3, qui n'est pas à l'échelle, les propriétés barrières du film servant de revêtement à la structure métallique 10 et constitué de trois couches successives 210, 211 et 212. Préférentiellement, chaque couche a une épaisseur comprise entre 20 et 30 micromètres.

Grâce à ces dispositions, l'effet barrière contre un gaz, tel que l'hydrogène, est amélioré.

Préférentiellement, le film polymérique est un film de nature composite constitué d'une matrice polymérique, et d'une ou plusieurs charge(s) formée(s) par les particules d'alumine présentant un fort facteur de forme, c'est-à-dire ayant une dimension beaucoup plus petite que les deux autres, par exemple d'un facteur 10 à 1000, permettant ainsi un effet de tortuosité.

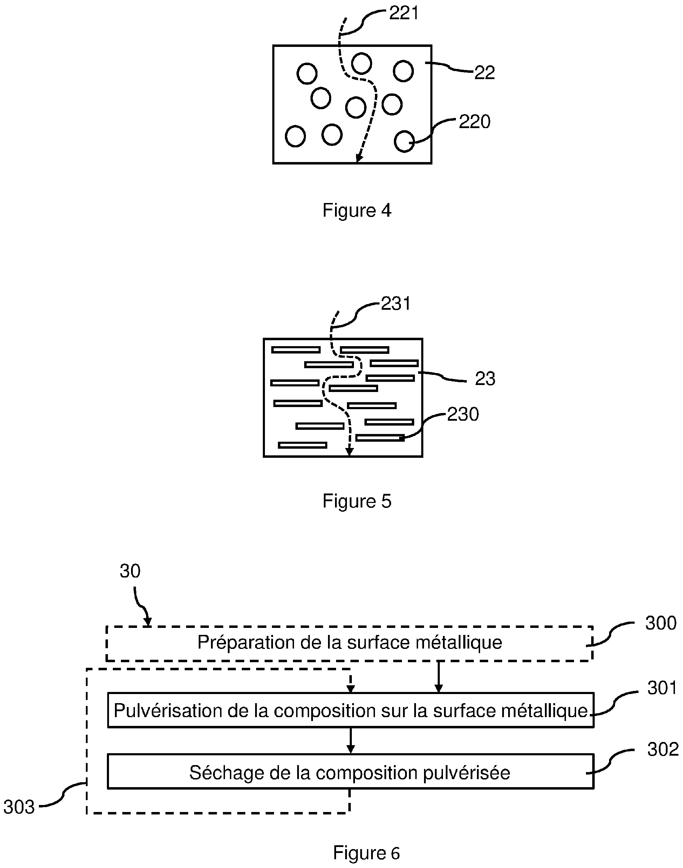

On observe sur les figures 4 et 5, qui ne sont pas à l'échelle, une représentation schématique de deux effets de tortuosité appliqués à un gaz au sein des films, 22 ou 23, objets de la présente invention. Les chemins du gaz, 221 ou 231, permettant d'illustrer l'effet de tortuosité, sont représentés par des flèches en pointillés.

Les effets de tortuosité correspondent à un rallongement du chemin de diffusion des molécules diffusantes, telles que les molécules constitutives d'un gaz, par exemple l'hydrogène gazeux. Ce rallongement implique une réduction du coefficient de diffusion à travers le film polymérique, et donc une diminution de la perméabilité des molécules diffusantes à travers ce film. Ainsi la pénétration des molécules diffusantes dans la surface métallique 10 est très limitée.

Sur la figure 4, l'effet de tortuosité illustré par le chemin 221 est lié à la forme les particules solides 220 dispersées dans le film 22. Les particules 220 présentent une forme sensiblement sphérique. Cet effet est présent, par exemple, dans une matrice polymérique composite.

Sur la figure 5, l'effet de tortuosité illustré par le chemin 231, est lié à la forme les particules solides 230 dispersées dans le film 23. Cet effet est présent, par exemple, dans une matrice polymérique composite. Les particules solides 230 présentent une forme sensiblement plaquettaire. Le chemin 231 créé par les particules sensiblement plaquettaires 230 et parcouru par les molécules diffusantes est plus important que le chemin 221 créé par les particules sensiblement sphériques 220.

Ainsi, la tortuosité au sein du film 23 est plus importante que la tortuosité au sein du film 22. Le film 23 présente de meilleures propriétés barrières comparées au film 22.

Préférentiellement, le film objet de la présente invention comporte une structure similaire au film 23, c'est-à-dire avec des particules solides sensiblement plaquettaires.

Dans des modes de réalisation, le film polymérique comporte un inhibiteur d'adsorption, d'absorption et/ou de diffusion, d'hydrogène, les proportions des constituants du film sont, par rapport à la masse totale du film :
- polymère vinylique : et/ou un copolymère vinylique : 70 à 95% en masse,
- Al₂O₃ : au moins 3,5% en masse et
- inhibiteur d'adsorption, d'absorption et/ou de diffusion, d'adsorption et/ou de diffusion d'hydrogène : 0,05 à 6 % en masse.

Dans des modes de réalisation, le film présente une épaisseur comprise entre 50 micromètres et 1 millimètre et préférentiellement supérieure à 250 micromètres.

### Tests de perméabilité

Des essais de perméabilité à l'hélium ont été réalisés afin de mettre en évidence l'effet de tortuosité des particules solides d'alumine (Al₂O₃) dans le film polymérique obtenu après application de la composition C décrite ci-dessus sur des échantillons. Les échantillons utilisés sont préparés par dépôt d'un disque de tissu poreux dans un moule en silicone en forme de disque de même diamètre que le disque de tissu poreux. Ensuite, 13 grammes de la composition C, décrite ci-dessus, est appliquée et imprégnée dans le tissu de façon uniforme. Puis, le tissu imprégné de composition C est séché pendant 72 heures à température ambiante et 6 heures à 60°C. Le tableau suivant montre les résultats des mesures de perméabilité pour les films polymériques composés par le copolymère EVOH avec ou sans particules solides d'alumines (Al₂O₃).

**Tableau 1**

| Nature du film | Coefficient de perméabilité P, g/(m.s.bar) |
|---|---|
| EVOH seul | 9,44 x10⁻⁹ |
| EVOH + Al₂O₃ | 3,21 x10⁻⁹ |

Le coefficient de perméabilité P est divisé par trois lorsque le film composé par le copolymère EVOH comprend les particules solides d'alumines (Al₂O₃), mettant en évidence l'effet de tortuosité de ces particules et ainsi la diminution de la perméabilité de l'hélium.

### Procédé d'application de la composition

La présente invention vise également un procédé 30 d'application de la composition filmogène sur une surface métallique objet de la présente invention, qui comporte :
- au moins une étape 301 de pulvérisation de la composition sur la surface et
- au moins une étape 302 de séchage et/ou réticulation de la composition pulvérisée.

Dans des modes de réalisation, lorsque la composition forme un gel, l'étape de pulvérisation 301 est remplacée par une étape d'application. L'application peut être réalisée au moyen d'un pinceau ou d'un réservoir et d'un applicateur à piston. En d'autres termes, le gel est déposé par contact.

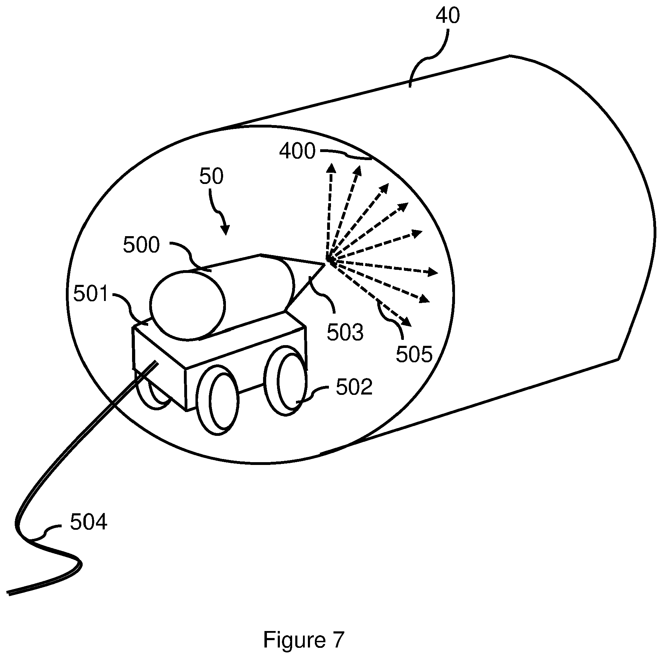

On observe sur la figure 6 un logigramme représentant un mode de réalisation particulier du procédé objet de la présente invention. Les étapes optionnelles sont représentées en pointillés. Les modes de réalisations du procédé 30 objet de la présente invention sont illustrés au moyen du dispositif 50 et de la conduite 40 représentés en figure 7.

Dans des modes de réalisation, la surface métallique correspond à la surface interne 400 de conduite 40 utilisée pour le transport d'un gaz. Par exemple, la conduite 40 est une conduite de transport et d'alimentation en gaz naturel, tel du méthane, dans laquelle de l'hydrogène gazeux a été injecté.

Dans des modes de réalisation, l'étape de pulvérisation 301 est mise en œuvre par un dispositif de pulvérisation 50.

Grâce à ces dispositions, l'étape de pulvérisation 301 de la composition objet de la présente invention est réalisée sur la surface interne 400 d'une conduite 40 préalablement installée. Par exemple, la conduite 40 présente un diamètre inférieur à 1,2 mètre et comporte des parties coudées.

Dans des modes de réalisation, tels que représentés en figure 7, le dispositif 50 de pulvérisation comporte :
- un moyen de déplacement,
- un réservoir 500 de stockage de la composition objet de la présente invention à pulvériser et
- au moins une tête de pulvérisation 503 connectée au réservoir 500 et envoyant la composition pulvérisée 505.

Préférentiellement, le dispositif 50 comporte un moyen de déplacement comportant un chariot 501 monté sur des roues 502. Le chariot supporte le réservoir 500. Encore plus préférentiellement, le chariot 501 comporte un moteur configuré pour actionner au moins une roue 502 et provoquer le déplacement du chariot 501 dans la conduite 40.

Dans des modes de réalisation (non représentés), le chariot comporte des patins. Préférentiellement, les patins sont disposés radialement autour du réservoir.

Dans des modes de réalisation (non représentés), les patins s'appuient totalement ou sur une partie de la surface interne de la canalisation.

Dans des modes de réalisation, tels que représentés en figure 7, le dispositif 50 comporte une source d'alimentation électrique. La source d'alimentation électrique comporte un câble 504 relié à un réseau électrique. Dans des modes de réalisation (non représentés), la source d'alimentation électrique est une source d'alimentation électrique autonome, par exemple une batterie. La source d'alimentation électrique autonome est montée sur le chariot et alimente en énergie électrique le moteur. Dans des modes de réalisation (non représentés), le dispositif est tiré manuellement à l'intérieur de la conduite 40.

Préférentiellement, la composition est pulvérisée, lors de l'étape de pulvérisation 301 au moyen d'une tête de pulvérisation 503, ayant la forme d'un tronc de cône muni d'orifices au travers desquels la composition est éjectée. La pulvérisation 505 de la composition est représentée par les flèches en pointillé sur la figure 7. Par exemple, le dispositif 50 réalise l'étape de pulvérisation 301 dans des conduites qui peuvent présenter une longueur d'au moins 100 kilomètres et un diamètre compris entre 2,5 centimètres et 1,5 mètre.

Dans des modes de réalisation (non représentés), le dispositif de pulvérisation comporte plusieurs têtes de pulvérisation.

Dans d'autres modes de réalisation (non représentés), la tête de pulvérisation réalise l'étape de pulvérisation par rotation. Par exemple, la vitesse de rotation est comprise entre 5 et 50 tours par minute. L'étape de pulvérisation 301 est ainsi mise en œuvre par la force centrifuge liée à la vitesse de rotation de la tête de pulvérisation.

Dans des modes de réalisation, la tête de pulvérisation réalise l'étape de pulvérisation par éjection d'un mélange statique sous pression. Par exemple, les pressions de pulvérisation sont comprises entre 20 et 200 bar.

Grâce à ces dispositions, le dispositif permet de pulvériser la composition objet de la présente invention sur l'intégralité d'une surface interne 400 d'une conduite 40 de diamètre compris entre 200 et 1200 millimètres.

Dans des modes de réalisation (non représentés), le dispositif de pulvérisation 50 comporte une caméra connectée à un terminal qui comporte :
- au moins un écran pour afficher les informations données par la caméra et
- au moins une interface homme-machine, par exemple un clavier et une souris, configurée pour commander le dispositif de pulvérisation 50.

Grâce à ces dispositions, l'étape de pulvérisation 301 est suivie et contrôlée à distance par un opérateur durant l'utilisation du dispositif 50.

Dans des modes de réalisation, l'étape de séchage et/ou réticulation 302 de la composition pulvérisée est réalisée par pulsation et/ou par circulation d'un flux d'air chaud. Par exemple, un ou plusieurs ventilateurs sont installés dans la canalisation pour faire circuler le flux d'air chaud.

Grâce à ces dispositions, l'étape de séchage et/ou réticulation est accélérée.

Dans des modes de réalisation, l'étape de séchage et/ou réticulation de la composition pulvérisée est réalisée par émission d'un rayonnement infrarouge, issu d'une ou plusieurs lampes à émission de rayonnements infrarouges.

Dans des modes de réalisation, le procédé comporte au moins deux itérations 303 de l'étape de pulvérisation 301 et de l'étape de séchage et/ou réticulation 302. Par exemple, les itérations 303 sont réalisées par circulation de deux dispositifs de pulvérisation dans la conduite réalisant l'étape de pulvérisation 301, l'intervalle de temps entre le passage des deux robots étant configuré pour que l'étape de séchage 302 de la première itération soit réalisée entre le passage des deux robots.

Dans des modes de réalisation, le procédé 30 comporte en amont de l'étape de pulvérisation 301, une étape de préparation 300 de la surface métallique. Par exemple, l'étape de préparation 300 comporte une étape de décapage par projection d'abrasifs, ces abrasifs étant ensuite éliminés de la surface métallique, par exemple, au moyen d'un aspirateur ou d'un tuyau à air comprimé exempt d'huile.

### Conduite revêtue du film polymérique

La présente invention vise également une conduite qui comporte un film polymérique présentant les caractéristiques énoncées ci-dessus. Par exemple, la conduite 40 comporte un film polymérique 20 obtenu par application d'une composition objet de présente invention selon le procédé 30. Ces éléments étant décrits ci-dessus en regard des figures 2, 6 et 7.

## Revendications

1. Utilisation d'un film polymérique (20, 21) obtenu par application d'une composition filmogène pour surface métallique (10), la composition filmogène comportant au moins un polymère vinylique et/ou un copolymère vinylique soluble dans l'eau, un solvant aqueux et des particules solides d'alumine (Al₂O₃) dispersées dans le solvant aqueux, le film polymérique comportant au moins un polymère vinylique et/ou un copolymère vinylique et des particules solides dispersées d'alumine (Al₂O₃) pour la protection d'une surface métallique contre la fragilisation par l'hydrogène.

2. Utilisation selon la revendication 1, dans laquelle les proportions respectives de la composition filmogène sont, par rapport à la masse totale de la composition :
- polymère vinylique et/ou un copolymère vinylique : 5 à 25% en masse,
- Al₂O₃ : 0,2 à 10% en masse et
- solvant aqueux : au moins 70% en masse.

3. Utilisation selon l'une des revendications 1 ou 2, dans lequel les proportions sont, par rapport à la masse totale du film :
- polymère vinylique et/ou un copolymère vinylique : 70 à 95% en masse, et
- Al₂O₃ : 3,5 à 30% en masse.

4. Utilisation selon l'une des revendications 1 à 3 dans laquelle le film comporte, de plus, un inhibiteur d'adsorption, d'absorption et/ou de diffusion, d'hydrogène.

5. Utilisation selon la revendication 4, dans laquelle les proportions du film sont, par rapport à la masse totale du film :
- polymère vinylique et/ou un copolymère vinylique : 70 à 95% en masse,
- Al₂O₃ : au moins 3,5% en masse, et
- inhibiteur d'adsorption, d'absorption et/ou de diffusion, d'hydrogène : 0,05 à 6 % en masse.

6. Utilisation selon l'une des revendications 1 à 5, dans lequel au moins un copolymère vinylique est un copolymère éthylène alcool vinylique (EVOH).

7. Utilisation selon l'une des revendications 1 à 6, dans laquelle le film présente une épaisseur, après séchage, comprise entre 50 micromètres et 1 millimètre.

8. Utilisation selon l'une des revendications 1 à 7, dans laquelle les particules d'Al₂O₃ forment des charges présentant un facteur de forme compris entre 10 et 1000.

## Patentansprüche

1. Verwendung einer Polymerfolie (20, 21), die durch Aufbringen einer filmbildenden Zusammensetzung für Metalloberflächen (10) erhalten wird, wobei die filmbildende Zusammensetzung mindestens ein wasserlösliches Vinylpolymer und/oder Vinylcopolymer, einem wässrigen Lösungsmittel und in dem wässrigen Lösungsmittel dispergierten festen Aluminiumoxidpartikeln (Al₂O₃) umfasst, wobei der Polymerfilm mindestens ein Vinylpolymer und/oder ein Vinylcopolymer und dispergierte feste Aluminiumoxidpartikel (Al₂O₃) zum Schutz einer Metalloberfläche vor Wasserstoffversprödung umfasst.

2. Verwendung nach Anspruch 1, wobei die jeweiligen Anteile der filmbildenden Zusammensetzung, bezogen auf die Gesamtmasse der Zusammensetzung, wie folgt sind:
- Vinylpolymer und/oder Vinylcopolymer: 5 bis 25 Massenprozent,
- Al₂O₃: 0,2 bis 10 Massenprozent und
- wässriges Lösungsmittel: mindestens 70 Massenprozent.

3. Verwendung nach einem der Ansprüche 1 oder 2, wobei die Anteile, bezogen auf die Gesamtmasse des Films, wie folgt sind:
- Vinylpolymer und/oder Vinylcopolymer: 70 bis 95 Massenprozent und
- Al₂O₃: 3,5 bis 30 Massenprozent.

4. Verwendung nach einem der Ansprüche 1 bis 3, wobei die Folie zusätzlich einen Inhibitor für die Adsorption, Absorption und/oder Diffusion von Wasserstoff enthält.

5. Verwendung nach Anspruch 4, wobei die Anteile des Films, bezogen auf die Gesamtmasse des Films, wie folgt sind:
- Vinylpolymer und/oder Vinylcopolymer: 70 bis 95 Massenprozent,
- Al₂O₃: mindestens 3,5 Massenprozent und
- Inhibitor der Adsorption, Absorption und/oder Diffusion von Wasserstoff: 0,05 bis 6 Massenprozent.

6. Verwendung nach einem der Ansprüche 1 bis 5, wobei mindestens ein Vinylcopolymer ein Ethylen-Vinylalkohol-Copolymer (EVOH) ist.

7. Verwendung nach einem der Ansprüche 1 bis 6, wobei der Film nach dem Trocknen eine Dicke zwischen 50 Mikrometern und 1 Millimeter aufweist.

8. Verwendung nach einem der Ansprüche 1 bis 7, wobei die Al₂O₃-Partikel Füllstoffe mit einem Formfaktor zwischen 10 und 1000 bilden.

## Claims

1. Use of a polymeric film (20, 21) obtained by applying a film-forming composition for a metal surface (10), the film-forming composition comprising at least a vinyl polymer and/or a vinyl copolymer soluble in water, an aqueous solvent and solid alumina particles (Al₂O₃) dispersed in the aqueous solvent, the polymeric film comprising at least a vinyl polymer and/or a vinyl copolymer and solid particles dispersed in alumina (Al₂O₃) for protecting a metal surface against hydrogen embrittlement.

2. Use according to claim 1, wherein the respective proportions of the film-forming composition are, relative to the total mass of the composition:
- vinyl polymer and/or a vinyl copolymer: 5 - 25 wt%;
- Al₂O₃: 0.2 - 10 wt%; and
- aqueous solvent: at least 70 wt%.

3. Use according to one of claims 1 or 2, wherein the proportions are, relative to the total mass of the film:
- vinyl polymer and/or a vinyl copolymer: 70 - 95 wt%; and
- Al₂O₃: 3.5 - 30 wt%.

4. Use according to one of claims 1 to 3, wherein the film also comprises an inhibitor of hydrogen adsorption, absorption and/or diffusion.

5. Use according to claim 4, wherein the proportions of the film are, relative to the total mass of the film:
- vinyl polymer and/or a vinyl copolymer: 70 - 95 wt%;
- Al₂O₃: at least 3.5 wt%; and
- inhibitor of hydrogen adsorption, absorption and/or diffusion: 0.05 - 6 wt%.

6. Use according to one of claims 1 to 5, wherein at least one vinyl copolymer is an ethylene vinyl alcohol (EVOH) copolymer.

7. Use according to one of claims 1 to 6, wherein the film has a thickness, after drying, of between 50 micrometres and 1 millimetre.

8. Use according to one of claims 1 to 7, wherein the Al₂O₃ particles form charges having a form factor of between 10 and 1000.
